# EUROPÄISCHE PATENTANMELDUNG

(11) **EP 2 455 710 A2**
(43) Veröffentlichungstag der Anmeldung: **23.05.2012**
(21) Anmeldenummer: 11185450.1
(22) Anmeldetag: 17.10.2011
(51) Int. Cl.: G01C 15/00

(54) **Rotationslasergerät und Verfahren zur Steuerung eines Laserstrahls**

(30) Priorität: 22.11.2010 DE 102010061726
(71) Anmelder: HILTI Aktiengesellschaft, 9494 Schaan (LI)
(72) Erfinder: Lukic, Sasha, 9470 Buchs (CH); Winter, Andreas, 6800 Feldkirch (AT)

(57) **Zusammenfassung**

Rotationslasergerät (1) aufweisend eine Lasereinrichtung (3), die einen Laserstrahl (5) erzeugt, eine Dreheinrichtung (9), die die Lasereinrichtung (3) zumindest teilweise um eine Rotationsachse (4) mit einer Rotationsgeschwindigkeit bewegt, und eine Messeinrichtung (21), mit der ein Drehwinkel der Lasereinrichtung (3) um die Rotationsachse (4) bestimmbar ist, wobei eine Speichereinrichtung (22) zur Speicherung mindestens einer Winkelposition vorgesehen ist.

## Beschreibung

Die vorliegende Erfindung betrifft ein Rotationslasergerät gemäß dem Oberbegriff des Anspruchs 1. Die Erfindung betrifft auch ein Verfahren zur Steuerung eines Laserstrahls gemäß dem Oberbegriff des Anspruchs 8.

Um Nivellier- oder Markierungsarbeiten im Innen- und Außenbereich durchzuführen, sind Lasergeräte bekannt, die punkt- und/oder linienförmige Lasermarkierungen erzeugen. Die Lasermarkierungen dienen dazu, Referenzpunkte oder Referenzlinien auf Wänden, Decken und Böden anzuzeigen. Bei diesen Lasergeräten wird zwischen Punkt- und/oder Linienlasergeräten und Rotationslasergeräten unterschieden. Punkt- und/oder Linienlasergeräte erzeugen mit Hilfe strahlformender Optiken, wie Zylinderlinsen und Prismen, auf einer Zielfläche punkt- und/oder linienförmige Laser Lasermarkierungen, die unter festen Winkeln zueinander angeordnet sind.

Bekannte Rotationslasergeräte umfassen eine Lasereinrichtung, die einen Laserstrahl erzeugt, eine Dreheinrichtung, die die Lasereinrichtung zumindest teilweise um eine Rotationsachse mit einer Rotationsgeschwindigkeit bewegt, und eine Messeinrichtung, mit der ein Drehwinkel der Lasereinrichtung um die Rotationsachse bestimmbar ist. Rotationslasergeräte werden in einem Rotationsmodus, einem Scanmodus und/oder einem Punktmodus betrieben. Im Rotationsmodus wird der Laserstrahl mit einer konstanten Rotationsgeschwindigkeit um die Rotationsachse bewegt und erzeugt auf einer Zielfläche eine durchgehende Lasermarkierung. Im Scanmodus wird der Laserstrahl in einem begrenzten Winkelbereich zwischen einem ersten und zweiten Endpunkt hin- und herbewegt und erzeugt auf einer Zielfläche eine begrenzte linienförmige Lasermarkierung, die als Laserlinie bezeichnet wird. Im Punktmodus ist die Rotationsgeschwindigkeit der Dreheinrichtung Null und der Laserstrahl erzeugt auf einer Zielfläche eine punktförmige Lasermarkierung, die als Laserpunkt bezeichnet wird.

Im Scanmodus eines Rotationslasergerätes erfolgt im Bereich der Endpunkte der begrenzten Laserlinie ein Abbremsen und Beschleunigen der Lasereinrichtung und der Laserstrahl ruht in den Endpunkten. Trifft der Laserstrahl in den Endpunkten auf das menschliche Auge, ist der Anteil des Laserstrahls, der vom Auge absorbiert wird, größer als bei einem rotierenden Laserstrahl und die Verletzungsgefahr steigt. Außerdem ist die Laserlinie im Bereich der Endpunkte unscharf. Die Unschärfe der Laserlinie entsteht durch das Abbremsen und anschließende Beschleunigen der Lasereinrichtung. Ein weiterer Nachteil von bekannten Rotationslasergeräten besteht darin, dass im Punktmodus nur ein einzelner Laserpunkt erzeugt wird und bekannte Rotationslasergeräte nicht dazu geeignet sind, Winkel von beispielsweise 90° oder 180° von einer Zielfläche auf eine andere Zielfläche zu übertragen.

Wünschenswert wäre es, ein Rotationslasergerät hinsichtlich der oben erläuterten Nachteile zu verbessern. Die Aufgabe der vorliegenden Erfindung besteht darin, beim Erstellen von begrenzten Laserlinien mit einem Rotationslasergerät die Verletzungsgefahr für den Bediener zu reduzieren. Außerdem soll das Rotationslasergerät geeignet sein, Winkel von einer Zielfläche auf eine andere Zielfläche zu übertragen.

Diese Aufgabe wird bei dem eingangs genannten Rotationslasergerät erfindungsgemäß durch die Merkmale des unabhängigen Anspruchs 1 und bei dem eingangs genannten Verfahren zur Steuerung eines Laserstrahls durch die Merkmale des unabhängigen Anspruchs 8 gelöst.

Erfindungsgemäß ist bei dem Rotationslasergerät eine Speichereinrichtung zur Speicherung mindestens einer Winkelposition vorgesehen. Durch die Speicherung mindestens einer Winkelposition besteht die Möglichkeit, den Laserstrahl in Abhängigkeit vom Drehwinkel zu steuern.

Bevorzugt ist eine Steuereinrichtung vorgesehen, die zumindest eine Strahleigenschaft des Laserstrahls in Abhängigkeit vom Drehwinkel einstellt. Als Strahleigenschaften des Laserstrahls eignet sich vor allem die Laserleistung und bei einem modulierten Laserstrahl die optische Frequenz und/oder die Amplitude. Diese Strahleigenschaften eignen sich besonders, um scharf begrenzte Laserlinien und/oder Laserpunkte auf einer Zielfläche zu erzeugen.

In einer bevorzugten Ausführungsform ist die Speichereinrichtung als mechanische Speichereinrichtung ausgebildet und in Form mindestens eines Referenzelementes auf einer Maßscheibe der Messeinrichtung angeordnet. Die Messeinrichtung umfasst eine Maßscheibe, die mit der Dreheinrichtung drehfest verbunden ist, eine Abtasteinrichtung zum Abtasten der Maßscheibe und eine Auswerte- und Steuereinrichtung. Dabei ist die Maßscheibe mit einer drehbaren Welle fest oder über Zahnräder oder -riemen drehfest verbunden. Eine fest verbundene Maßscheibe hat den Vorteil, dass die Messung des Drehwinkels stabil gegenüber äußeren Einflüssen, vor allem der Temperatur, ist. Durch die Zwischenschaltung einer Übersetzung kann die Auflösung des Drehwinkels erhöht werden. Eine mechanische Speichereinrichtung hat den Vorteil, dass für die Speichereinrichtung kein zusätzliches Bauteil erforderlich ist und die Erfassung der Winkelposition stabil gegenüber äußeren Einflüssen ist.

Besonders bevorzugt sind die Referenzelemente in Form von Referenzspuren auf der Maßscheibe angeordnet. Die Referenzspuren werden von der Abtasteinrichtung der Messeinrichtung überwacht.

In einer alternativen bevorzugten Ausführungsform ist die Speichereinrichtung als elektronische Speichereinrichtung ausgebildet, wobei die Speichereinrichtung besonders bevorzugt mit einer Eingabeeinrichtung verbunden ist. Eine elektronische Speichereinrichtung hat gegenüber einer mechanischen Speichereinrichtung den Vorteil, dass Laserlinien mit einem beliebigen Öffnungswinkel erzeugt und beliebige Winkel von einer Zielfläche auf eine andere Zielfläche übertragen werden können. Außerdem können bei einer elektronischen Speichereinrichtung gespeicherte Winkelpositionen gelöscht und neue Winkelpositionen gespeichert werden.

Bevorzugt ist ein Laserempfänger vorgesehen, wobei der Laserempfänger über eine Kommunikationsverbindung mit dem Rotationslasergerät verbindbar ist. Durch die Kombination des Rotationslasergerätes mit einem Laserempfänger besteht die Möglichkeit, Informationen über den Laserstrahl an das Rotationslasergerät zu übermitteln.

Erfindungsgemäß wird bei dem Verfahren zur Steuerung eines Laserstrahls mindestens eine Winkelposition in einer Speichereinrichtung gespeichert und zumindest eine Strahleigenschaft des Laserstrahls wird in Abhängigkeit vom Drehwinkel eingestellt. Durch die Möglichkeit, den Laserstrahl zu steuern, können begrenzte Laserlinien oder Laserpunkte optisch durch sich ändernde Strahleigenschaften des Laserstrahls angezeigt werden.

Bevorzugt wird die Laserleistung des Laserstrahls und/oder bei einem modulierten Laserstrahl die optische Frequenz und/oder die Amplitude in Abhängigkeit vom Drehwinkel eingestellt. Diese Strahleigenschaften eignen sich besonders, um scharf begrenzte Laserlinien und/oder Laserpunkte auf einer Zielfläche zu erzeugen.

In einer ersten bevorzugten Verfahrensvariante werden eine erste und zweite Winkelposition in der Speichereinrichtung gespeichert und zumindest eine Strahleigenschaft des Laserstrahls wird bei Erreichen der ersten Winkelposition von einem ersten Wert auf einen zweiten Wert und bei Erreichen der zweiten Winkelposition von dem zweiten Wert auf den ersten Wert verändert. Diese Verfahrensvariante wird genutzt, um auf einer Zielfläche eine begrenzte Laserlinie zu erzeugen. Dazu wird die Laserleistung als Strahleigenschaft zwischen Null und einem konstanten Leistungswert geschaltet. Das Schalten der Laserleistung zwischen Null und dem konstanten Leistungswert erfolgt sehr schnell, so dass zwischen dem ersten und zweiten Endpunkt, der der ersten und zweiten Winkelposition entspricht, eine genau begrenzte Laserlinie erzeugt wird. Da der Laserstrahl mit konstanter Rotationsgeschwindigkeit bewegt wird, ist die Verletzungsgefahr für das menschliche Auge im Vergleich zu einem ruhenden Laserstrahl reduziert.

In einer zweiten bevorzugten Verfahrensvariante werden aus der mindestens einen gespeicherten Winkelposition ein erster und zweiter Drehwinkel berechnet und zumindest eine Strahleigenschaft des Laserstrahls wird bei Erreichen des ersten Drehwinkels von einem ersten Wert auf einen zweiten Wert und bei Erreichen des zweiten Drehwinkels von dem zweiten Wert auf den ersten Wert verändert. Diese Verfahrensvariante wird genutzt, um auf einer Zielfläche einen oder mehrere Laserpunkte zu erzeugen. Dazu wird die Laserleistung als Strahleigenschaft zwischen Null und einem konstanten Leistungswert geschaltet. In der Speichereinrichtung ist die Winkelposition des Laserpunktes gespeichert. Die Auswerte- und Steuereinrichtung der Messeinrichtung bestimmt aus der Winkelposition einen ersten Drehwinkel, der kleiner als die Winkelposition ist, und einen zweiten Drehwinkel, der größer als die Winkelposition ist. Der Abstand zwischen dem ersten und zweiten Drehwinkel ist so gewählt, dass die Laserleistung der Strahlquelle geschaltet werden kann und der Laserpunkt für den Bediener gut sichtbar ist. Da der Laserstrahl mit konstanter Rotationsgeschwindigkeit bewegt wird, ist die Verletzungsgefahr für das menschliche Auge im Vergleich zu einem ruhenden Laserstrahl reduziert.

Die Erfindung betrifft außerdem ein Verfahren zur Messung eines Winkels mit einem erfindungsgemässen Rotationslasergerät, das eine elektronische Speichereinrichtung aufweist und mit einem Laserempfänger über eine Kommunikationsverbindung verbunden ist. Der momentane Drehwinkel der Lasereinrichtung bzw. des Laserstrahls wird als Winkelposition in der Speichereinrichtung gespeichert, wenn der Laserstrahl auf eine Detektoreinrichtung eines Laserempfängers auftrifft. Um die Genauigkeit der Messung zu erhöhen, sollte die Detektoreinrichtung möglichst schmal ausgebildet sein oder die Detektoreinrichtung weist ein spezielles Detektorfeld auf.

Der Laserempfänger wird auf einen ersten Punkt positioniert und die Winkelposition als erste Winkelposition in der Speichereinrichtung gespeichert und anschließend wird der Laserempfänger auf einen zweiten Punkt positioniert und die Winkelposition als zweite Winkelposition in der Speichereinrichtung gespeichert. Der Winkel zwischen dem ersten und dem zweiten Punkt wird als Differenz aus den in der Speichereinrichtung gespeicherten Winkelpositionen bestimmt. Dieses Verfahren bietet die Möglichkeit, ein Rotationslasergerät zur Winkelmessung einzusetzen.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:

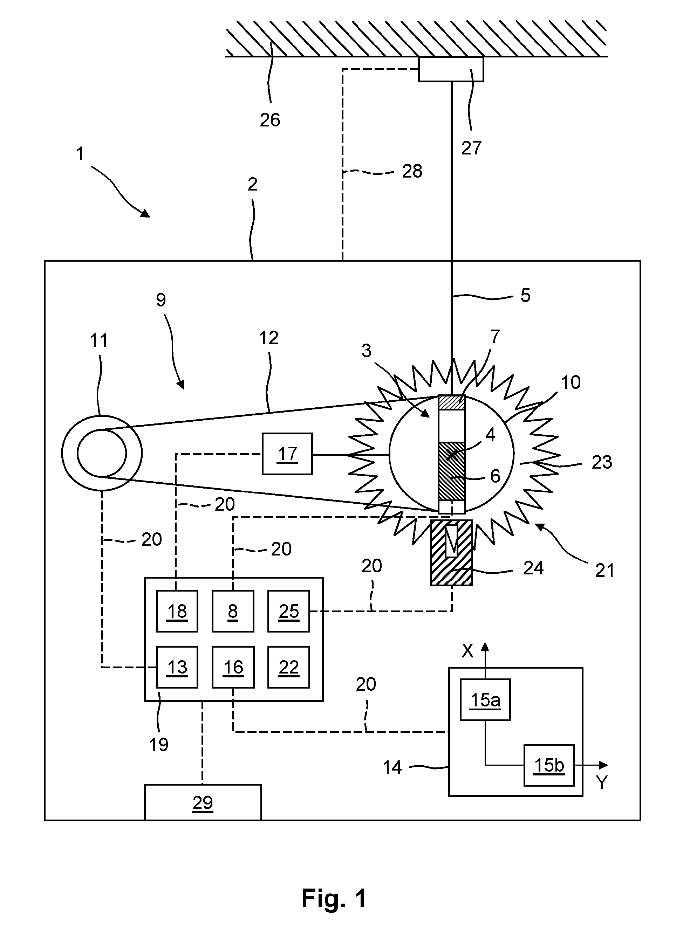

- Fig. 1: ein erfindungsgemäßes Rotationslasergerät mit einer Messeinrichtung zur Erfassung eines Drehwinkels und einer Speichereinrichtung zur Speicherung einer Winkelposition;

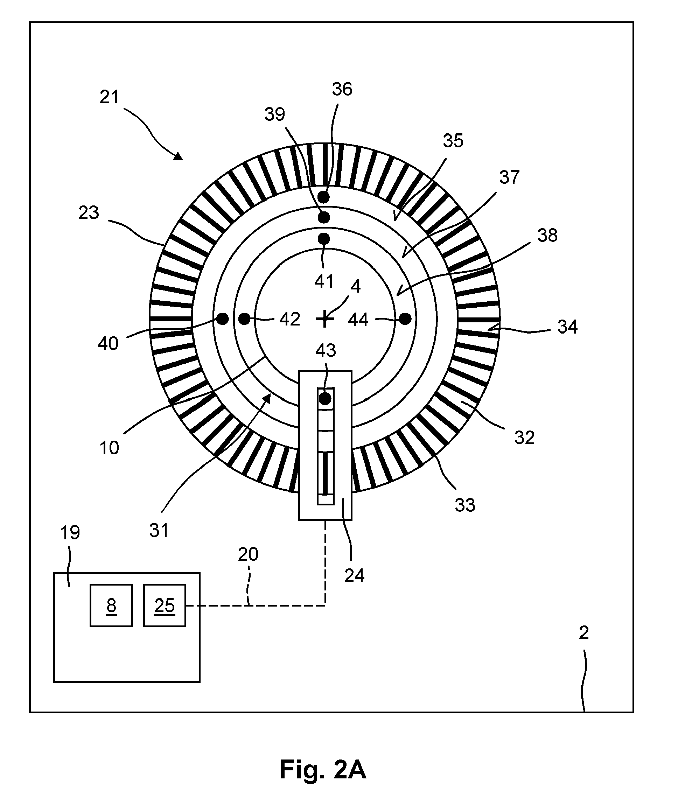

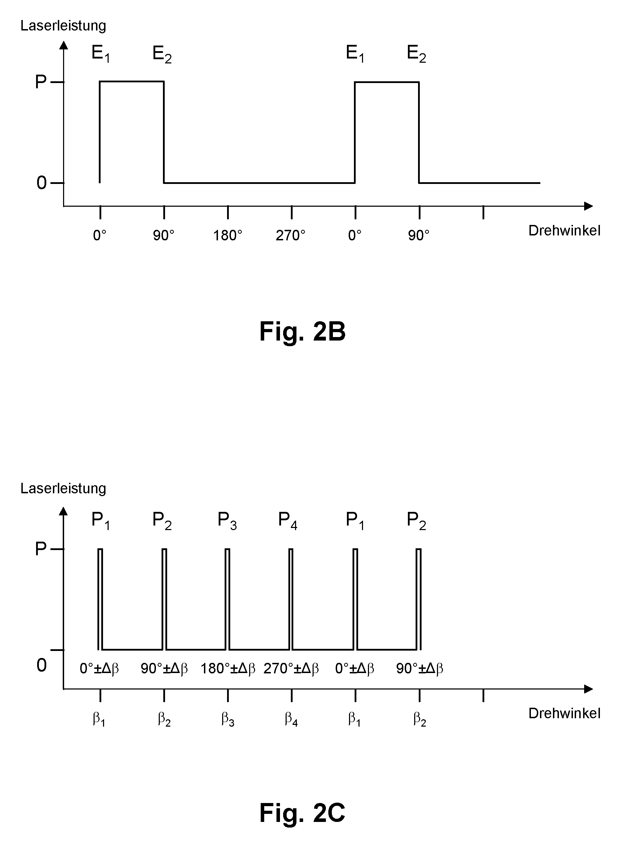

- Fign. 2A-C: die Messeinrichtung der Fig. 1 und eine erste Ausführungsform der Speichereinrichtung, die als mechanische Speichereinrichtung ausgebildet ist (Fig. 2A) sowie ein erfindungsgemässes Verfahren zur Steuerung der Laserleistung in einem Linienmodus, in dem eine linienförmige Lasermarkierung erzeugt wird, (Fig. 2B) und in einem Mehrfachpunktmodus, in dem mehrere punktförmige Lasermarkierungen erzeugt werden (Fig. 2C);

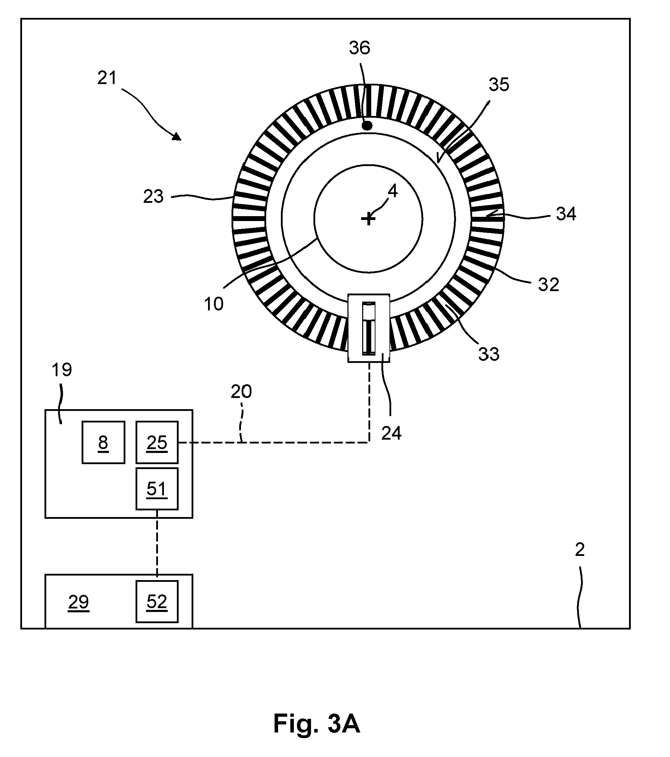

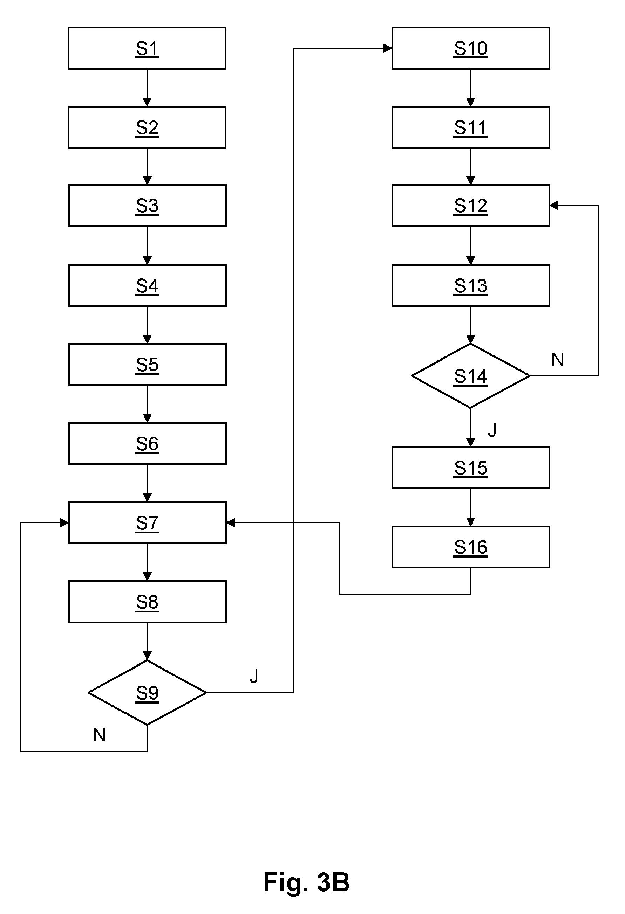

- Fign. 3A, B: die Messeinrichtung der Fig. 1 und eine zweite Ausführungsform der Speichereinrichtung, die als elektronische Speichereinrichtung ausgebildet ist (Fig. 3A) sowie ein erfindungsgemässes Verfahren zur Steuerung der Laserleistung in einem Linienmodus (Fig. 3B);

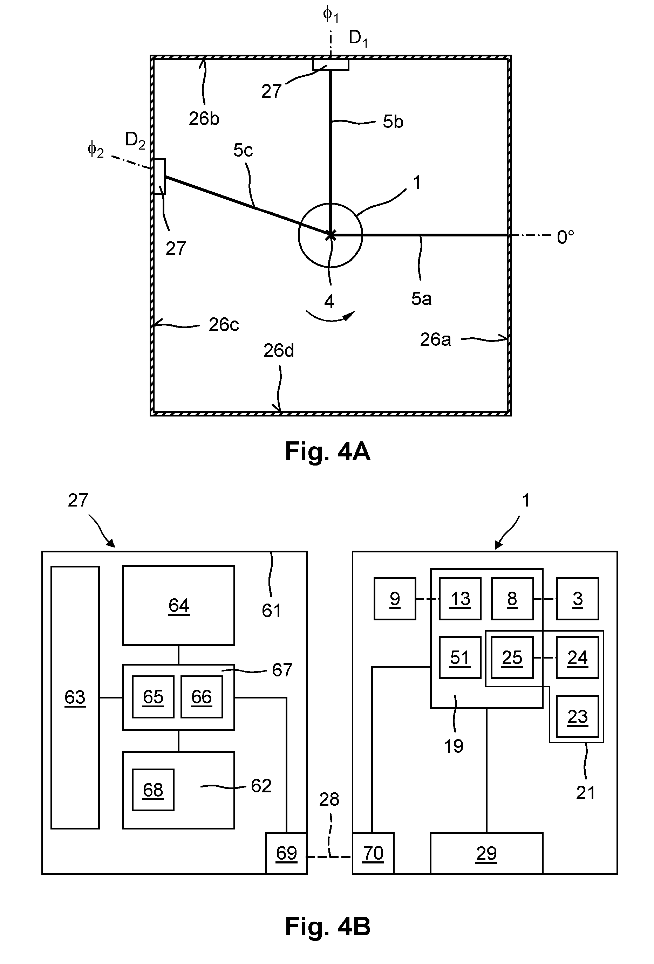

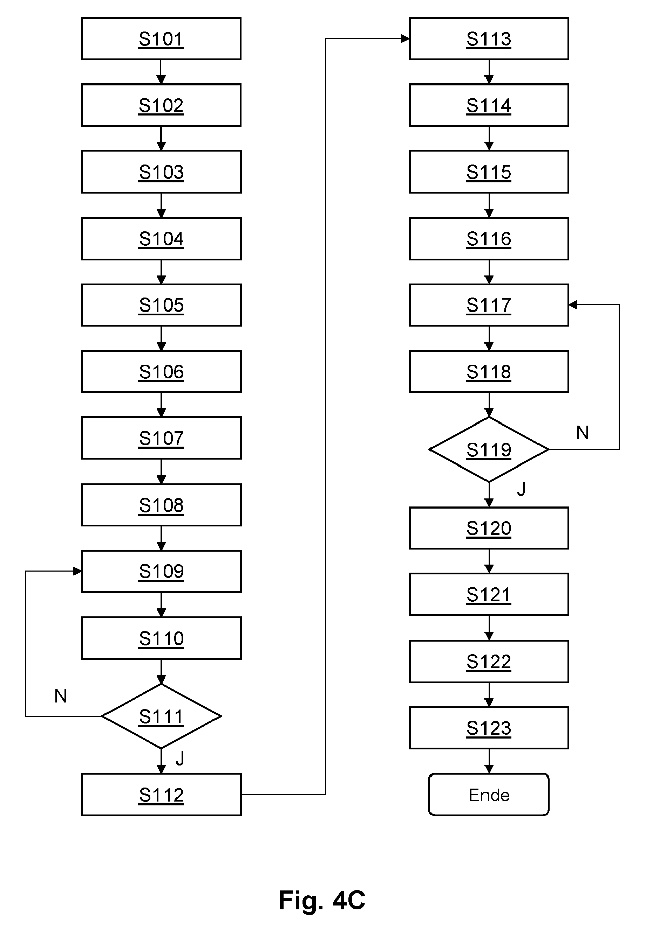

- Fign. 4A-C: eine Anordnung bestehend aus dem Rotationslasergerät der Fig. 1 und einem Laserempfänger zur Messung eines Winkels zwischen zwei Punkten (Fig. 4A), das Zusammenwirken des Rotationslasergerätes und des Laserempfängers in Form eines Blockdiagramms (Fig. 4B) sowie ein erfindungsgemässes Verfahren zur Messung eines Winkels zwischen zwei Punkten (Fig. 4C).

Fig. 1 zeigt in einer schematischen Darstellung ein erfindungsgemäßes Lasergerät **1,** das als Rotationslasergerät ausgebildet ist. Das Rotationslasergerät **1** umfasst ein Gehäuse **2** und eine in dem Gehäuse 2 angeordnete Lasereinrichtung **3**, die um eine Rotationsachse **4** drehbar ausgebildet ist.

Die Lasereinrichtung 3 erzeugt einen Laserstrahl **5** und umfasst eine Strahlquelle **6** und ein optisches Element **7** zur Strahlformung des Laserstrahls, das als Strahlformungsoptik bezeichnet wird. Die Strahlquelle 6 ist als Halbleiterlaser ausgebildet, der einen Laserstrahl 5 im sichtbaren Spektrum, beispielsweise einen roten Laserstrahl mit einer Wellenlänge von 635 nm oder einen grünen Laserstrahl mit einer Wellenlänge von 532 nm, erzeugt. Nach dem Austritt des Laserstrahls 5 aus der Strahlquelle 6 wird der Laserstrahl 5 mit Hilfe der Strahlformungsoptik 7 kollimiert und ein paralleler Laserstrahl erzeugt. Die Steuerung der Strahlquelle 6 erfolgt über eine erste Steuereinrichtung **8**.

Die Lasereinrichtung 3 ist mit einer Dreheinrichtung **9** verbunden, die die Lasereinrichtung 3 mit einer Rotationsgeschwindigkeit um die Rotationsachse 4 bewegt, wobei die Rotationsgeschwindigkeit konstant aber auch variabel sein kann. Die Dreheinrichtung 9 umfasst eine drehbare Welle **10**, eine Motoreinheit 11 und eine Übertragungseinrichtung **12**, die in Form eines Zahnriemens ausgebildet ist und die Bewegung der Motoreinheit 11 auf die Welle **10** überträgt. Die Lasereinrichtung 3 ist mit der drehbaren Welle 10 gekoppelt und um die Rotationsachse 4 drehbar. Die Steuerung der Dreheinrichtung 9 erfolgt über eine zweite Steuereinrichtung **13**.

In der Ausführung der Fig. 1 werden die Strahlquelle 6 und die Strahlformungsoptik 7 von der Dreheinrichtung 9 um die Rotationsachse 4 bewegt. In einer alternativen Ausführung umfasst die Lasereinrichtung 3 zusätzlich ein optisches Element zur Umlenkung des Laserstrahls, das als Umlenkoptik bezeichnet wird. Die Strahlquelle 6 erzeugt einen Laserstrahl, der auf die Umlenkoptik gerichtet ist. Die Umlenkoptik ist mit der Welle 10 gekoppelt und wird von der Dreheinrichtung 9 um die Rotationsachse 4 bewegt. Die Strahlformungsoptik 7 kann zwischen der Strahlquelle 6 und der Umlenkoptik angeordnet sein. Außerdem kann die Strahlformungsoptik 7 in die Strahlquelle 6 integriert sein oder bei einer Strahlquelle 6 mit einer hohen Strahlqualität und geringen Divergenz eventuell ganz entfallen. In jedem Fall wird mindestens eine Komponente der Lasereinrichtung 3 von der Dreheinrichtung 9 um die Rotationsachse 4 bewegt.

Das Rotationslasergerät 1 weist eine Nivelliereinrichtung **14** auf, mit der der Laserstrahl 5 unabhängig von einer Ausrichtung des Gehäuses 2 in einer horizontalen Ebene, die senkrecht zum Schwerefeld der Erde ausgerichtet ist, verläuft. Die horizontale Ebene wird von zwei senkrecht zueinander verlaufenden Nivellierachsen, die als **X**- und **Y**-Achse bezeichnet werden, aufgespannt. Die Nivelliereinrichtung 14 umfasst für die X-Achse eine erste Nivelliereinrichtung 15a und für die Y-Achse eine zweite Nivelliereinrichtung **15b**. Die Nivelliereinrichtungen **15a**, 15b umfassen jeweils eine Sensoreinrichtung und eine Verstelleinrichtung. Die Steuerung der Nivelliereinrichtung 14 erfolgt über eine dritte Steuereinrichtung **16.**

Die Laserebene, in der der Laserstrahl verläuft, kann um einen Neigungswinkel gegenüber der horizontalen Ebene geneigt sein. Dazu ist die Welle 10 mittels einer Neigungseinrichtung **17** zur Verstellung des Neigungswinkels um die X-Achse verstellbar ausgebildet. Die Laserebene kann alternativ um die Y-Achse geneigt werden. Die Steuerung der Neigungseinrichtung 17 erfolgt über eine vierte Steuereinrichtung **18.**

Die erste Steuereinrichtung 8 zur Steuerung der Lasereinrichtung 3, die zweite Steuereinrichtung 13 zur Steuerung der Dreheinrichtung 9, die dritte Steuereinrichtung 16 zur Steuerung der Nivelliereinrichtung 14 und die vierte Steuereinrichtung 18 zur Steuerung der Neigungseinrichtung 17 können als getrennte Komponenten ausgebildet sein oder in eine gemeinsame Kontrolleinrichtung **19**, die beispielsweise als Mikrocontroller ausgebildet ist, integriert sein. Die Steuereinrichtungen 8, 13, 16, 18 sind über Kommunikationsverbindungen 20 mit den zu steuernden Komponenten 6, 9, 14, 17 verbunden.

Das Rotationslasergerät 1 umfasst eine Messeinrichtung **21**, die den Drehwinkel der Lasereinrichtung 3 bzw. des Laserstrahls 5 während der Rotation um die Rotationsachse 4 erfasst, und eine Speichereinrichtung **22** zur Speicherung eines oder mehrerer Drehwinkel. Die Messeinrichtung 21 besteht aus einer Maßscheibe **23**, die mit der Welle 10 drehfest verbunden ist, einer Abtasteinrichtung **24** zum Abtasten der Maßscheibe **23** und einer Auswerte- und Steuereinrichtung **25**. Die Auswerte- und Steuereinrichtung 25 ist in der in Fig. 1 gezeigten Ausführung in die Kontrolleinrichtung 19 integriert, sie kann alternativ als separate Elektronikkomponente ausgebildet sein. Die Speichereinrichtung 22 ist beispielsweise als elektronische Speicherkomponente oder als mechanische Speicherkomponente in Form von Referenzelementen auf der Maßscheibe 23 angeordnet.

Der Laserstrahl 5, der aus dem Rotationslasergerät 1 austritt, erzeugt auf einer Zielfläche **26** eine Lasermarkierung. Um die Lasermarkierung sichtbar zu machen, wird ein Laserempfänger 27 verwendet, der auf der Zielfläche 26 positioniert ist. Der Laserempfänger 27 ist über eine Kommunikationsverbindung **28** mit dem Rotationslasergerät 1 verbindbar.

Das Rotationslasergerät 1 weist eine Bedienungseinrichtung **29** auf, die in das Gehäuse 2 integriert und von außen bedienbar ist. Neben der in das Gehäuse 2 integrierten Bedienungseinrichtung 29 kann eine weitere Bedienungseinrichtung in Form einer Fernbedienungseinrichtung vorgesehen sein, die über eine Kommunikationsverbindung mit dem Rotationslasergerät 1 verbindbar ist. Die Fernbedienungseinrichtung ist beispielsweise in den Laserempfänger 27 integriert.

Fig. **2A** zeigt die Messeinrichtung 21 zur Erfassung der Drehwinkel der Lasereinrichtung 3 bzw. des Laserstrahls 5 und eine erste Ausführungsform einer Speichereinrichtung 31 zur Speicherung eines oder mehrerer Drehwinkel, die als mechanische Speichereinrichtung auf der Maßscheibe 23 der Messeinrichtung 21 ausgebildet ist.

Die Messeinrichtung 21 ist als inkrementaler Drehgeber ausgebildet und basiert auf einem photoelektrischen Messprinzip. Die Maßscheibe 23 der Messeinrichtung 21 weist eine Mehrzahl an Segmenten auf, die abwechselnd als helle Streifen **32** und dunkle Streifen **33** ausgebildet sind. Die Segmente 32, 33 werden auch als Inkremente bezeichnet und bilden auf der Maßscheibe 23 eine sogenannte Inkrementalspur **34**, die die Maßverkörperung des Drehgebers darstellt. Bei einer vollständigen Umdrehung der Maßscheibe 23 werden so viele elektrische Signale ausgegeben, wie Inkremente auf der Maßscheibe 23 vorhanden sind. Die Anzahl der Inkremente 32, 33 bestimmt die Auflösung der Messeinrichtung 21 und jedes Inkrement 32, 33 entspricht einer Winkeleinheit der Maßscheibe 23. Die Auflösung der Maßscheibe 23 kann nachträglich nicht verändert werden.

Die Maßscheibe 23 weist neben der Inkrementalspur **34** eine zweite Spur **35** auf, in der ein Referenzelement **36,** das die Nullposition festlegt und im Folgenden als Nullelement 36 bezeichnet wird, angeordnet ist. Die zweite Spur wird auch als Referenzspur 35 bezeichnet.

Die Speichereinrichtung 31 ist in die Maßscheibe 23 integriert und in Form von Referenzelementen auf der Maßscheibe 23 ausgebildet. Die Maßscheibe 23 weist neben der Inkrementalspur 34 und der Referenzspur 35 eine dritte Spur **37** und eine vierte Spur **38** auf, die gemeinsam die mechanische Speichereinrichtung 31 bilden.

Die dritte Spur 37 umfasst ein erstes Referenzelement 39, das einer ersten Winkelposition α₁ von 0° entspricht, und ein zweites Referenzelement **40**, das einer zweiten Winkelposition α₂ von 90° entspricht. Das erste und zweite Referenzelement 39, 40 werden genutzt, um in einem Linienmodus des Rotationslasergerätes 1 eine begrenzte Laserlinie mit einem Öffnungswinkel von 90° auf der Zielfläche 26 zu erzeugen.

Die vierte Spur 38 der Maßscheibe 23 umfasst ein erstes Referenzelement **41**, das einer Winkelposition β₁ von 0° entspricht, ein zweites Referenzelement **42**, das einer Winkelposition β₂ von 90° entspricht, ein drittes Referenzelement **43,** das einer Winkelposition β₃ von 180° entspricht, und ein viertes Referenzelement **44,** das einer Winkelposition β₄ von 270° entspricht. Die Winkelpositionen β₁, β₂, β₃, β₄ sind mittels der Abtasteinrichtung 24 aus der Speichereinrichtung 31 auslesbar und werden genutzt, um in einem Mehrfachpunktmodus des Rotationslasergerätes 1 vier Laserpunkte, die jeweils unter 90° angeordnet sind, zu erzeugen.

Fig. 2B zeigt die Steuerung der Laserleistung des Laserstrahls 5 in einem Linienmodus des Rotationslasergerätes 1 am Beispiel einer begrenzten Laserlinie mit einem Öffnungswinkel von 90° zwischen einem ersten Endpunkt E₁ und einem zweiten Endpunkt E₂ mit Hilfe der in der Speichereinrichtung 31 gespeicherten ersten und zweiten Winkelpositionen α₁, α₂.

Nachdem der Bediener am Rotationslasergerät 1 den Linienmodus eingestellt hat, positioniert er den ruhenden Laserstrahl 5 auf den ersten Endpunkt E₁ der Laserlinie. Der erste Endpunkt E₁ entspricht der ersten Winkelposition α₁ und der zweite Endpunkt E₂ der zweiten Winkelposition α₂. Wird die mit der Welle 10 drehfest verbundene Maßscheibe 23 mit einer konstanten Rotationsgeschwindigkeit um die Rotationsachse 4 gedreht, werden das in der dritten Spur 37 angeordnete erste und zweite Referenzelement 39, 40 von der Abtasteinrichtung 24 erfasst.

Die Laserleistung des Laserstrahls 5 wird von der ersten Steuereinrichtung 8 in Abhängigkeit der ersten und zweiten Winkelposition α₁, α₂ gesteuert. Bei Erreichen der ersten Winkelposition α₁, d.h. sobald die Abtasteinrichtung 24 das erste Referenzelement 39 erfasst, wird die Laserleistung der Strahlquelle 6 von Null auf einen konstanten Leistungswert P erhöht und bei Erreichen der zweiten Winkelposition α₂, d.h. sobald die Abtasteinrichtung 24 das zweite Referenzelement 40 erfasst, wird die Laserleistung von dem konstanten Leistungswert P auf Null reduziert. Das Schalten der Laserleistung zwischen Null und dem konstanten Leistungswert P über die erste Steuereinrichtung 8 erfolgt sehr schnell, so dass zwischen dem ersten und zweiten Endpunkt E₁, E₂ eine genau begrenzte Laserlinie erzeugt wird. Da der Laserstrahl 5 mit konstanter Rotationsgeschwindigkeit um die Rotationsachse 4 bewegt wird, ist die Verletzungsgefahr für das menschliche Auge im Vergleich zu einem ruhenden Laserstrahl reduziert.

Fig. 2C zeigt die Steuerung der Laserleistung des Laserstrahls 5 in einem Mehrfachpunktmodus des Rotationslasergerätes 1 am Beispiel von vier Laserpunkten P₁, P₂, P₃, P₄, die jeweils unter 90° angeordnet sind, mit Hilfe der in der Speichereinrichtung 31 gespeicherten Winkelpositionen β₁, β₂, β₃, β₄.

Nachdem der Bediener am Rotationslasergerät 1 den Mehrfachpunktmodus eingestellt hat, positioniert er den ruhenden Laserstrahl 5 auf den ersten Laserpunkt P₁. Der erste Laserpunkt P₁ entspricht der Winkelposition β₁, der zweite Laserpunkt P₂ der Winkelposition β₂, der dritte Laserpunkt P₃ der Winkelposition β₃ und der vierte Laserpunkt P₄ der Winkelposition β₄. Wird die Maßscheibe 23 mit einer konstanten Rotationsgeschwindigkeit um die Rotationsachse 4 gedreht, werden die in der vierten Spur 38 angeordneten Referenzelemente 41, 42, 43, 44 von der Abtasteinrichtung 24 erfasst.

Die Auswerte- und Steuereinrichtung 25 berechnet aus der gespeicherten Winkelposition β₁ einen ersten Drehwinkel β₁ - Δβ und einen zweiten Drehwinkel β₁ + Δβ. Dabei liegt der Wert Δβ im Bereich der Genauigkeit, mit der die Laserleistung der Strahlquelle 6 geschaltet werden kann, und ist zum anderen so festgelegt, dass der jeweilige Laserpunkt für den Bediener gut sichtbar ist. Die Laserleistung des Laserstrahls 5 wird von der ersten Steuereinrichtung 8 bei Erreichen des ersten Drehwinkels β₁ - Δβ von Null auf einen konstanten Leistungswert P erhöht und bei Erreichen des zweiten Drehwinkels β₁ + Δβ von dem konstanten Leistungswert P auf Null reduziert. Das Gleiche gilt für die weiteren ersten Drehwinkel β₂ - Δβ, β₃ - Δβ und β₄ - Δβ und die weiteren zweiten Drehwinkel β₂ + Δβ, β₃ + Δβ und β₄ + Δβ, die die Auswerte- und Steuereinrichtung 25 aus den gespeicherten Winkelpositionen β₃, β₃ und β₄ berechnet.

Mit Hilfe des Mehrfachpunktmodus kann der Bediener des Rotationslasergerätes 1 Winkel von einer Zielfläche auf eine andere Zielfläche übertragen. Dadurch, dass der Laserstrahl 5 mit konstanter Rotationsgeschwindigkeit um die Rotationsachse 4 rotiert, ist die Verletzungsgefahr für das menschliche Auge bei gleicher Laserleistung gegenüber einem ruhenden Laserstrahl verringert.

Neben den in den Fign. 2A-C gezeigten Winkelpositionen kann jede beliebige Winkelposition als Referenzelement auf der Maßscheibe 23 angeordnet und in der mechanischen Speichereinrichtung 31 gespeichert werden. Allerdings müssen die Winkelpositionen, die als Referenzelement auf der Maßscheibe 23 gespeichert werden sollen, bereits bei der Herstellung der Messeinrichtung 21 festgelegt werden. Eine nachträgliche Änderung und Speicherung weiterer Winkelpositionen ist nicht möglich. Die mechanische Speichereinrichtung 31 eignet sich daher vor allem für Winkelpositionen, die in der Anwendung häufig benötigt werden. Dazu gehören die Winkelposition 90° und 180°.

Fig. 3A zeigt die Messeinrichtung 21 zur Erfassung des Drehwinkels der Lasereinrichtung 3 bzw. des rotierenden Laserstrahls 5 und eine zweite Ausführungsform einer Speichereinrichtung 51, die als elektronische Speichereinrichtung ausgebildet ist. Um beliebige Winkel von einer Zielfläche 26 auf eine andere Zielfläche 26 zu übertragen oder Laserlinien mit einem beliebigen Öffnungswinkel zu erzeugen, ist die elektronische Speichereinrichtung 51 besonders geeignet.

Die Speichereinrichtung 51 ist in die Kontrolleinrichtung 19 integriert und mit der Auswerte- und Steuereinrichtung 25 der Messeinrichtung 21 verbunden, sie kann alternativ als gemeinsame Elektronikkomponente mit der Auswerte- und Steuereinrichtung 25 ausgebildet sein.

Die in der Speichereinrichtung 51 gespeicherten Winkelpositionen, die beispielsweise zur Steuerung der Strahleigenschaften des Laserstrahls 5 genutzt werden, sind dauerhaft als feste Werte in der Speichereinrichtung 51 gespeichert oder werden vom Bediener über eine Eingabeeinrichtung 52 eingegeben und sind nur vorübergehend in der Speichereinrichtung 51 gespeichert. Die Eingabeeinrichtung 52 ist in die Bedienungseinrichtung 29 des Rotationslasergerätes 1 integriert. Alternativ oder zusätzlich kann die Eingabeeinrichtung 52 in die Fernbedienungseinrichtung des Laserempfängers 27 integriert sein.

Fig. **3B** zeigt ein erfindungsgemäßes Verfahren zur Steuerung der Laserleistung des Laserstrahls 5 im Linienmodus des Rotationslasergerätes 1 am Beispiel einer begrenzten Laserlinie mit einem Öffnungswinkel zwischen dem ersten Endpunkt E₁ und dem zweiten Endpunkt E₂.

In einem Schritt **S1** wählt der Bediener den Betriebsmodus des Rotationslasergerätes 1 aus, im vorliegenden Fall den Linienmodus. Die Steuereinrichtung 25 fragt beim Bediener in einem Schritt S2 alle benötigten Parameter ab. Dazu gehören beispielsweise der Anfangswinkel und der Endwinkel der begrenzten Laserlinie, die den Endpunkten E₁ und E₂ entsprechen, oder alternativ der Anfangswinkel und der Öffnungswinkel der begrenzten Laserlinie. Der Bediener gibt die Parameter in einem Schritt S3 über die Eingabeeinrichtung 52 ein. Die Anfangs- und Endwinkel der begrenzten Laserlinie werden in einem Schritt S4 als erste Winkelposition α₁ und zweite Winkelposition α₂ in der Speichereinrichtung 51 gespeichert.

Nachdem die vorbereitenden Schritte abgeschlossen sind, wird die Welle 10 und die mit der Welle 10 zumindest teilweise drehfest verbundene Lasereinrichtung 3 in einem Schritt **S5** von der Dreheinrichtung 9 mit konstanter Rotationsgeschwindigkeit um 360° um die Rotationsachse 4 gedreht. Die Abtasteinrichtung 24 überwacht die Referenzspur 35 der Maßscheibe 23 und erfasst in einem Schritt S6 das Nullelement 36 und übermittelt diese Information an die Auswerte- und Steuereinrichtung 25 der Messeinrichtung 21.

Die Erfassung des Drehwinkels beginnt bei dem Drehwinkel 0°, der durch die Position des Nullelementes 36 in der Referenzspur 35 festgelegt ist. Während der Rotation der Welle 10 mit konstanter Rotationsgeschwindigkeit um die Rotationsachse 4 überwacht die Abtasteinrichtung 24 die Inkremente 32, 33, die als helle Streifen 32 und dunkle Streifen 33 ausgebildet sind, in der Inkrementalspur 34 der Maßscheibe 23.

Bei einem Wechsel der Inkremente 32, 33 von einem hellen Streifen 32 zu einem dunklen Streifen 33 oder umgekehrt erzeugt die Abtasteinrichtung 24 in einem Schritt **S7** ein elektrisches Signal, das an die Auswerte- und Steuereinrichtung 25 übermittelt wird. Die Auswerte- und Steuereinrichtung 25 bestimmt in einem Schritt **S8** den momentanen Drehwinkel der Welle 10 und vergleicht den momentanen Drehwinkel in einem Schritt S9 mit der ersten Winkelposition α₁ + n.360° mit n = 1, 2, 3, .... Der momentane Drehwinkel des Laserstrahls 5 ergibt sich als Summe aus dem vorherigen Drehwinkel und der Winkeleinheit, die einem Inkrement 32, 33 entspricht. Unterschreitet der momentane Drehwinkel die erste Wnkelposition α₁ + n.360° (N in S9), wird das Verfahren mit Schritt S7 fortgesetzt. Entspricht der momentane Drehwinkel der ersten Winkelposition α₁ + n.360° (J in S9), übermittelt die Auswerte- und Steuereinrichtung 25 diese Information in einem Schritt **S10** an die Steuereinrichtung 8 der Strahlquelle 6. In einem Schritt **S11** steuert die Steuereinrichtung 8 die Strahleigenschaften des Laserstrahls 5 und erhöht die Laserleistung der Strahlquelle 6 von Null auf einen konstanten Leistungswert.

Nach Schritt S11 wird die Überwachung der Inkrementalspur 34 durch die Abtasteinrichtung 24 fortgesetzt. Beim Wechsel der Inkremente 32, 33 erzeugt die Abtasteinrichtung 24 in einem Schritt **S12** ein elektrisches Signal, das an die Auswerte- und Steuereinrichtung 25 übermittelt wird. Die Auswerte- und Steuereinrichtung 25 bestimmt in einem Schritt **S13** den momentanen Drehwinkel der Welle 10 und vergleicht den momentanen Drehwinkel in einem Schritt **S14** mit der zweiten Winkelposition α₂ + n.360° mit n = 1, 2, 3, .... Unterschreitet der momentane Drehwinkel die zweite Winkelposition α₂ + n.360° (N in S14), wird das Verfahren mit Schritt S12 fortgesetzt. Entspricht der momentane Drehwinkel der zweiten Winkelposition α₂ + n.360° (J in S14), übermittelt die Auswerte- und Steuereinrichtung 25 diese Information in einem Schritt **S15** an die Steuereinrichtung 8 der Strahlquelle 6. In einem Schritt **S16** steuert die Steuereinrichtung 8 die Strahleigenschaften des Laserstrahls 5 und reduziert die Laserleistung der Strahlquelle 6 von dem konstanten Leistungswert auf Null.

Nach Schritt S16 wird die Überwachung der Inkrementalspur 34 durch die Abtasteinrichtung 24 mit Schritt S7 fortgesetzt. Die Rotation der Welle 10 um die Rotationsachse 4 mit konstanter Rotationsgeschwindigkeit erfolgt solange, bis der Bediener die Rotation unterbricht.

Fig. **4A** zeigt eine weitere Anwendung des Rotationslasergerätes 1 und des Laserempfängers 27. Das Rotationslasergerät 1 und der Laserempfänger 27 können zu einer Winkelmessung zwischen einem ersten Punkt D₁ und einem zweiten Punkt **D**₂ eingesetzt werden.

Das Rotationslasergerät 1 ist in einem geschlossenen Raum angeordnet und erzeugt im Rotationsmodus eine durchgehende Lasermarkierung auf den Zielflächen 26a, 26b, 26c, 26d, die die vier Wände des geschlossenen Raumes darstellen. Der erste Punkt D₁, der auf der Zielfläche 26b angeordnet ist, entspricht einer ersten Winkelposition φ₁ und der zweite Punkt D₂, der auf der Zielfläche 26c angeordnet ist, entspricht einer zweiten Winkelposition φ₂. Der erste und zweite Punkt D₁, D₂ sind durch die Position des Laserempfängers 27 bestimmt.

Fig. **4B** zeigt die wesentlichen Komponenten des Laserempfängers 27 und das Zusammenwirken des Laserempfängers 27 mit dem Rotationslasergerät 1 in Form eines Blockdiagramms.

Der Laserempfänger 27 umfasst ein Gehäuse **61**, in das eine Bedienungseinrichtung **62,** eine Detektoreinrichtung **63** zur Detektion des Laserstrahls 5 und eine Anzeigeeinrichtung **64** integriert sind. Die Detektoreinrichtung **63** und die Anzeigeeinrichtung 64 sind mit einer Auswerteeinrichtung **65** verbunden. Die Auswerteeinrichtung 65 ist mit einer Steuereinrichtung **66** zur Steuerung des Laserempfängers 27 verbunden, wobei die Auswerte- und Steuereinrichtungen 65, 66 in eine beispielsweise als Mikrocontroller ausgebildete Kontrolleinrichtung **67** integriert sind. Der Laserempfänger 27 ist über einen Modusschalter **68** zwischen verschiedenen Betriebsmodi schaltbar.

Die Kommunikation zwischen dem Laserempfänger 27 und dem Rotationslasergerät 1 erfolgt über die Kommunikationsverbindung 28, die eine erste Sende-/Empfangseinheit **69** im Laserempfänger 27 mit einer zweiten Sende-/Empfangseinheit 70 im Rotationslasergerät 1 verbindet.

Fig. 4C zeigt ein erfindungsgemäßes Verfahren zur Messung eines Winkels zwischen dem ersten und zweiten Punkt D₁, D₂ mit Hilfe des Rotationslasergerätes 1 und des Laserempfängers 27.

Der Bediener aktiviert in einem Schritt **S101** den Winkelmessmodus über die Bedienungseinrichtung 62 des Laserempfängers 27. In einem Schritt **S102** wird die Kommunikationsverbindung 28 zwischen dem Laserempfänger 27 und dem Rotationslasergerät 1 aktiviert. Die Steuereinrichtung 66 des Laserempfängers 27 übermittelt in einem Schritt **S103** einen Steuerbefehl an das Rotationslasergerät 1 auf der Zielfläche 26 eine durchgehende Lasermarkierung zu erzeugen. In einem Schritt **S104** wird ein rotierender Laserstrahl erzeugt. Die Abtasteinrichtung 24 erfasst in einem Schritt **S105** das Nullelement 36 und übermittelt diese Information an die Auswerte- und Steuereinrichtung 25 der Messeinrichtung 21.

In einem Schritt **S106** wird der Bediener aufgefordert, den Laserempfänger 27 auf den ersten Punkt D₁ zu positionieren. Der Bediener positioniert den Laserempfänger 27 in einem Schritt **S107** auf den ersten Punkt D₁ und bestätigt über die Bedienungseinrichtung, dass der Laserempfänger 27 positioniert ist.

Die Auswerte- und Steuereinrichtung 25 erteilt in einem Schritt **S108** einen Steuerbefehl an die Abtasteinrichtung 24, den Drehwinkel zu erfassen. Die Erfassung des Drehwinkels beginnt bei dem Drehwinkel 0°, der durch die Position des Nullelementes 36 in der Referenzspur 35 festgelegt ist. Bei einem Wechsel der Inkremente 32, 33 von einem hellen Streifen 32 zu einem dunklen Streifen 33 oder umgekehrt erzeugt die Abtasteinrichtung 24 in einem Schritt **S109** ein elektrisches Signal, das an die Auswerte- und Steuereinrichtung 25 der Messeinrichtung 21 übermittelt wird. Die Auswerte- und Steuereinrichtung 25 bestimmt in einem Schritt **S110** den momentanen Drehwinkel des Laserstrahls 5.

In einem Schritt **S111** fragt die Auswerte- und Steuereinrichtung 25, ob die Detektoreinrichtung 63 des Laserempfängers 27 einen Laserstrahl 5 empfangen hat. Hat die Detektoreinrichtung 63 keinen Laserstrahl empfangen (N in 111), wird das Verfahren mit Schritt S109 fortgesetzt. Wenn die Detektoreinrichtung 63 einen Laserstrahl 5 empfangen hat (J in S111), wird der momentane Drehwinkel in einem Schritt **S112** von der Auswerte- und Steuereinrichtung 25 als erste Winkelposition φ₁ in der Speichereinrichtung 51 gespeichert und die Erfassung des Drehwinkels mittels der Abtasteinrichtung 24 wird in einem Schritt **S113** unterbrochen bzw. beendet.

In einem Schritt **S114** wird der Bediener aufgefordert, den Laserempfänger 27 auf den zweiten Punkt D₂ zu positionieren. Der Bediener positioniert den Laserempfänger 27 in einem Schritt **S115** auf den zweiten Punkt D₂ und bestätigt über die Bedienungseinrichtung, dass der Laserempfänger 27 positioniert ist.

Das Verfahren wird mit den Schritten **S116, S117** und **S118** fortgesetzt, die den Schritten S108, S109 und S110 entsprechen. In einem Schritt S119 fragt die Steuereinrichtung, ob die Detektoreinrichtung 63 des Laserempfängers 27 einen Laserstrahl 5 empfangen hat. Hat die Detektoreinrichtung 63 keinen Laserstrahl empfangen (N in S119), wird das Verfahren mit Schritt S117 fortgesetzt. Wenn die Detektoreinrichtung 63 einen Laserstrahl 5 empfangen hat (J in S119), wird der momentane Drehwinkel wird in einem Schritt **S120** von der Auswerte- und Steuereinrichtung 25 als zweite Winkelposition φ₂ in der Speichereinrichtung 51 gespeichert.

In einem Schritt **S121** berechnet die Auswerte- und Steuereinrichtung 25 den Winkel zwischen dem ersten Punkt D₁ und dem zweiten Punkt D₂ als Differenz aus den gespeicherten Winkelpositionen φ₂ - φ₁ und übermittelt den berechneten Winkel φ₂ - φ₁ in einem Schritt **S122** an die Anzeigeeinrichtung 64 des Laserempfängers 27. Der Winkel φ₂ - φ₁ wird dem Bediener in einem Schritt **S123** auf der Anzeigeeinrichtung 64 des Laserempfängers 27 angezeigt. Das Verfahren ist nach Schritt S123 beendet.

Alternativ kann der Bediener die Winkelmessung mit Hilfe von zwei Laserempfängern 27 durchführen, die auf dem ersten und zweiten Punkt D₁, D₂ positioniert werden. In diesem Fall entfällt der Schritt S113.

## Patentansprüche

1. Rotationslasergerät (1) aufweisend
eine Lasereinrichtung (3), die einen Laserstrahl (5) erzeugt,
eine Dreheinrichtung (9), die die Lasereinrichtung (3) zumindest teilweise um eine Rotationsachse (4) mit einer Rotationsgeschwindigkeit bewegt, und
eine Messeinrichtung (21), mit der ein Drehwinkel der Lasereinrichtung (3) um die Rotationsachse (4) bestimmbar ist,
**dadurch gekennzeichnet, dass** eine Speichereinrichtung (22; 31; 51) zur Speicherung mindestens einer Winkelposition (α₁, α₂; β₁, β₂, β₃, β₄; φ₁, φ₂) vorgesehen ist.

2. Rotationslasergerät nach Anspruch 1, **dadurch gekennzeichnet, dass** eine Steuereinrichtung (8), die zumindest eine Strahleigenschaft des Laserstrahls (5) in Abhängigkeit vom Drehwinkel einstellt, vorgesehen ist.

3. Rotationslasergerät nach einem der Ansprüche 1 bis 2, **dadurch gekennzeichnet, dass** die Speichereinrichtung als mechanische Speichereinrichtung (31) ausgebildet und in Form mindestens eines Referenzelementes (39, 40; 41-44) auf einer Maßscheibe (23) der Messeinrichtung (21) angeordnet ist.

4. Rotationslasergerät nach Anspruch 4, **dadurch gekennzeichnet, dass** die Referenzelemente (39, 40; 41-44) in Form von Referenzspuren (37, 38) auf der Maßscheibe (23) angeordnet sind.

5. Rotationslasergerät nach einem der Ansprüche 1 bis 2, **dadurch gekennzeichnet, dass** die Speichereinrichtung als elektronische Speichereinrichtung (51) ausgebildet ist.

6. Rotationslasergerät nach Anspruch 5, **dadurch gekennzeichnet, dass** die Speichereinrichtung (51) mit einer Eingabeeinrichtung (52) verbunden ist.

7. Rotationslasergerät nach einem der Ansprüche 1 bis 6, **dadurch gekennzeichnet, dass** ein Laserempfänger (27) vorgesehen ist, wobei der Laserempfänger (27) über eine Kommunikationsverbindung (28) mit dem Rotationslasergerät (1) verbindbar ist.

8. Verfahren zur Steuerung eines Laserstrahls (5), bei dem
eine Lasereinrichtung (3) zumindest teilweise mittels einer Dreheinrichtung (9) um eine Rotationsachse (4) mit einer Rotationsgeschwindigkeit bewegt wird, und
eine Messeinrichtung (21) den Drehwinkel der Lasereinrichtung (3) bzw. des Laserstrahls (5) um die Rotationsachse (4) erfasst,
**dadurch gekennzeichnet, dass** mindestens eine Winkelposition (α₁, α₂; β₁, β₂, β₃, β₄) in einer Speichereinrichtung (22; 31; 51) gespeichert wird und zumindest eine Strahleigenschaft des Laserstrahls (5) in Abhängigkeit vom Drehwinkel eingestellt wird.

9. Verfahren nach Anspruch 8, **dadurch gekennzeichnet, dass** die Laserleistung des Laserstrahls (5) und/oder bei einem modulierten Laserstrahl die optische Frequenz und/oder die Amplitude in Abhängigkeit vom Drehwinkel eingestellt werden.

10. Verfahren nach einem der Ansprüche 8 bis 9, **dadurch gekennzeichnet, dass** eine erste und zweite Winkelposition (α₁, α₂) in der Speichereinrichtung (22; 31; 51) gespeichert werden und zumindest eine Strahleigenschaft des Laserstrahls (5) bei Erreichen der ersten Winkelposition (α₁) von einem ersten Wert auf einen zweiten Wert und bei Erreichen der zweiten Winkelposition (α₂) von dem zweiten Wert auf den ersten Wert verändert wird.

11. Verfahren nach einem der Ansprüche 8 bis 10, **dadurch gekennzeichnet, dass** aus der mindestens einen gespeicherten Winkelposition (β₁, β₂, β₃, β₄) ein erster Drehwinkel (β₁ - Δβ, β₂ - Δβ, β₃ - Δβ, β₄ - Δβ) und ein zweiter Drehwinkel (β₁ + Δβ, β₂ + Δβ, β₃ + Δβ, β₄ + Δβ) berechnet werden und zumindest eine Strahleigenschaft des Laserstrahls (5) bei Erreichen des ersten Drehwinkels (β₁ - Δβ, β₂ - Δβ, β₃ - Δβ, β₄ - Δβ) von einem ersten Wert auf einen zweiten Wert und bei Erreichen des zweiten Drehwinkels (β₁, + Δβ, β₂ + Δβ, β₃ + Δβ, β₄ + Δβ) von dem zweiten Wert auf den ersten Wert verändert wird.

12. Verfahren zur Messung eines Winkels (Δφ) mit einem Rotationslasergerät (1) nach einem der Ansprüche 5 bis 7, bei dem
eine Lasereinrichtung (3) zumindest teilweise mittels einer Dreheinrichtung (9) um eine Rotationsachse (4) mit einer Rotationsgeschwindigkeit bewegt wird, und
eine Messeinrichtung (21) den Drehwinkel der Lasereinrichtung (3) bzw. des Laserstrahls (5) um die Rotationsachse (4) erfasst,
**dadurch gekennzeichnet, dass** der momentane Drehwinkel der Lasereinrichtung (3) bzw. des Laserstrahls (5) als Winkelposition (φ₁, φ₂) in der Speichereinrichtung (51) gespeichert wird, wenn der Laserstrahl (5) auf eine Detektoreinrichtung (63) eines Laserempfängers (27) auftrifft.

13. Verfahren nach Anspruch 12, **dadurch gekennzeichnet, dass** der Laserempfänger (27) auf einen ersten Punkt (D₁) positioniert wird und die Winkelposition als erste Winkelposition (φ₁) in der Speichereinrichtung (51) gespeichert wird und der Laserempfänger (27) anschließend auf einen zweiten Punkt (D₂) positioniert wird und die Winkelposition als zweite Winkelposition (φ₂) in der Speichereinrichtung (51) gespeichert wird.

14. Verfahren nach Anspruch 13, **dadurch gekennzeichnet, dass** der Winkel (Δφ) zwischen dem ersten Punkt (D₁) und dem zweiten Punkt (D₂) als Differenz aus den gespeicherten Winkelpositionen (φ₁, φ₂) bestimmt wird.
